# EUROPEAN PATENT APPLICATION

(11) **EP 4 793 736 A1**
(43) Date of publication of application: **19.08.2026**
(21) Application number: 26154509.9
(22) Date of filing: 27.01.2026
(51) Int. Cl.: G06F 1/16, A45C 11/00, A63F 13/98, H04M 1/02, H04M 1/04

(54) **CONNECTION SYSTEM**

(30) Priority: 04.03.2025 CN 202520366597 U
(71) Applicant: Shenzhen DeOne Innovation Technology Co., Ltd, Shenzhen, Guangdong 518000 (CN)
(72) Inventor: HE, Beijing, Shenzhen, 518000 (CN); LI, Chengyi, Shenzhen, 518000 (CN); YU, Lei, Shenzhen, 518000 (CN)
(74) Representative: Metida

(57) **Abstract**

A connection system, configured for connecting a first device and a second device, includes a first shell providing a first receiving cavity for receiving the first device by exposing a first display area thereof; and a bracket extending from the first shell. One end of the bracket is detachably connected to a side of the first shell opposite to another side where the first device is received; the other end of the bracket is configured to hold the second device by exposing a second display area thereof.

## Description

### TECHNICAL FIELD

The present application relates to the field of extended device connectivity, particularly to a connection system.

### BACKGROUND

With the continuous advancement of electronic devices, their functions have become increasingly diversified, as electronic devices permeate every aspect of daily life, they enhance people's quality of life. With the improvement in living standards, the demand for more powerful functionalities in electronic products has grown, yet while some devices excel in specific functions, their capabilities remain singular.

Take electronic game consoles for example, electronic game consoles on the market only have gaming-related functions, when tackling difficult game levels, users often need to refer to external devices for walkthroughs, such as searching for game guides on their phones. Since walkthroughs typically involve multiple steps, players frequently check their phones while using the console. To access both the guide and the game simultaneously, they must place the phone on the desk, requiring them to turn or look up repeatedly to check the guide, which results in a poor user experience.

### SUMMARY

The objective of the present utility model is to address the deficiencies and shortcomings of existing technologies by providing a connection system that links a first device and a second device, enabling a first display area of the first device and a second display area of the second device to be simultaneously exposed. This allows users to observe both the first display area of the first device and the second display area of the second device.

A connection system, configured for connecting a first device and a second device, includes a first shell providing a first receiving cavity for receiving the first device to expose a first display area thereof; and a bracket extending from the first shell. One end of the bracket is detachably connected to a side of the first shell opposite to another side where the first device is received; the other end of the bracket is configured to hold the second device by exposing a second display area thereof.

A connection system includes a first shell and a bracket. The first shell is provided with a first receiving cavity, and the first receiving cavity is configured for allowing the first device to be received into the first receiving cavity along a first direction, exposing a first display area thereof. One end of the bracket is detachably connected to a side of the first shell opposite to another side where the first device received. The other end of the bracket is configured for allowing a second device to be held along the first direction, exposing a second display area thereof. The bracket extends at least partially along a second direction, with the first direction being perpendicular to the second direction, enabling simultaneous exposure of the first display area and the second display area.

After adopting the above technical solution, the beneficial effects of the present utility model are as follows: the first device is assembled through the first shell, one end of the bracket is detachably connected to the side of the first shell facing away from the first device, and the other end of the bracket is assembled and connected to the second device, and the first device is assembled along the first direction on the first shell, and the second device is assembled along the first direction on the bracket, so that the first display area of the first device and the second display area of the second device face the same direction. At least a portion of the bracket extends in the second direction, which is perpendicular to the first direction, so that both the first display area and the second display area are exposed simultaneously, allowing users to observe the second display area of the second device while using the first device.

### BRIEF DESCRIPTION OF THE DRAWINGS

In order to explain the technical solutions of the embodiments of the present disclosure more clearly, the following will briefly introduce the accompanying drawings used in the embodiments. Apparently, the drawings in the following description are only some embodiments of the present disclosure. Those of ordinary skill in the art can obtain other drawings based on these drawings without creative work.
FIG. 1 is a schematic view of a connection system according to an embodiment of the present disclosure.
FIG. 2 is a schematic view of the connection system along A-A' line of FIG. 1.
FIG. 3 is a schematic view of the connection system along B-B' line of FIG. 1.
FIG. 4 shows a first shell of the connection system along B-B' line of FIG. 1.
FIG. 5 is an exploded view of the bracket according to an embodiment of the present disclosure.
FIG. 6 is a schematic view of the connection system of FIG. 1 connecting the first device and the second device.
FIG. 7 is an exploded view of FIG. 6.

### Drawing references:

Elements and References: first shell 10; bracket 20; first main body 11; first receiving cavity 13; installation part 111; protection part 112; first connection unit 1111; first connecting part 11111; first clamping part 11112; first guiding slope 11113; second guiding slope 11114; first through hole 11115; first extension part 12; avoidance hole 121; support unit 21; second connection unit 22; suction unit 23; third main body 211; second through hole 2111; third connecting part 212; connecting legs 2121; first axis hole 2122; avoidance groove 2123; fourth main body 221; connecting slot 222; second connecting part 223; third guiding slope 224; fourth guiding slope 225; second clamping parts 226; suction part 231; fourth connecting part 232; fifth main body 2311; cover plate 2312; magnetic component 2313; third through hole 23111; accommodating space 2314; second axis hole 2321; screw hole 2322; screw 233; first rotating shaft 24; damping sleeve 25; first device 30; second device 40; first display area 31; second display area 41; first direction X; second direction Y; third direction Z.

### DETAILED DESCRIPTION OF THE EMBODIMENTS

The accompanying drawings in the embodiment of the present disclosure are combined with the technical scheme in the embodiment of the present disclosure is clearly and completely described, Obviously, the described embodiment is only a part of the embodiment of the present disclosure, but not all embodiments are based on the embodiment of the present disclosure, and all other embodiments obtained by ordinary technicians in the field on the premise of not doing creative work belong to the protection range of the present disclosure.

In order to make the above objectives, features, and advantages of the present application more obvious and understandable, the following will provide further detailed explanations of the present application in conjunction with the accompanying drawings and specific implementation methods.

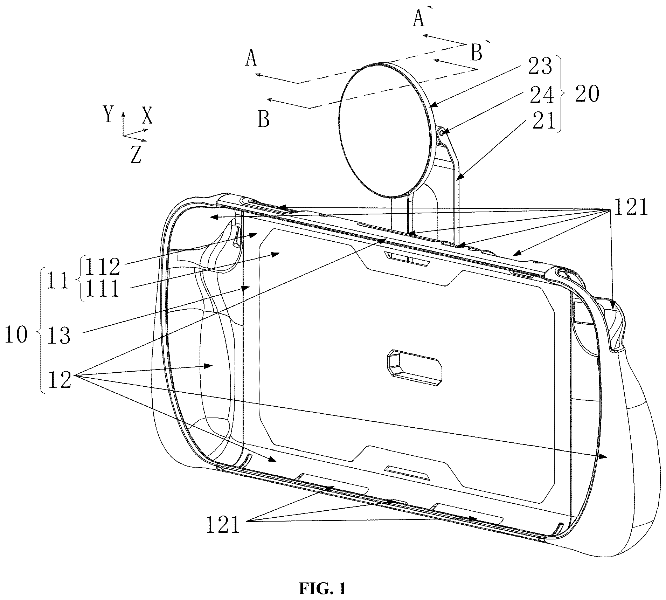

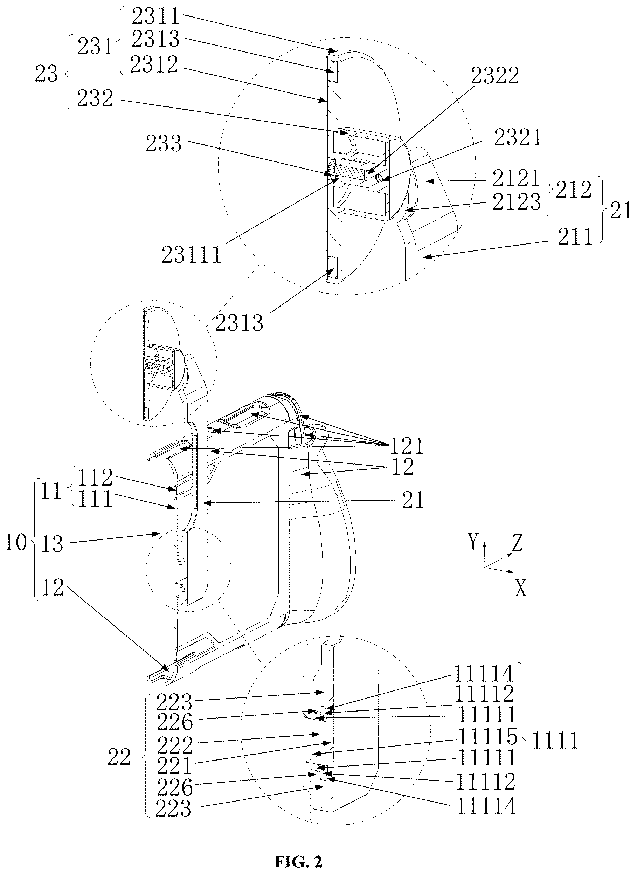

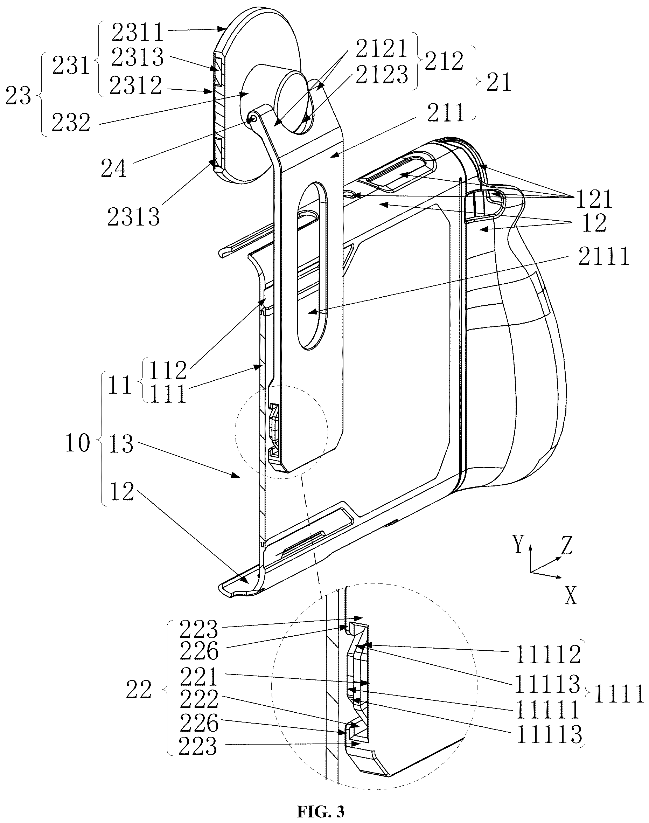

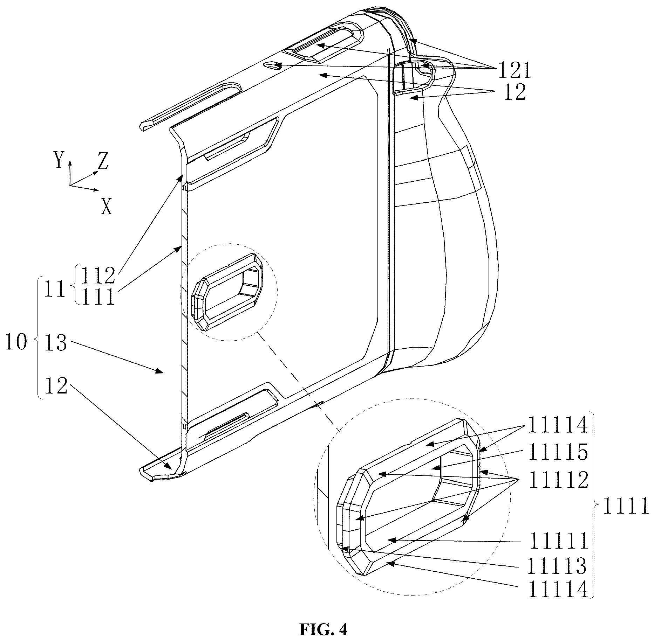

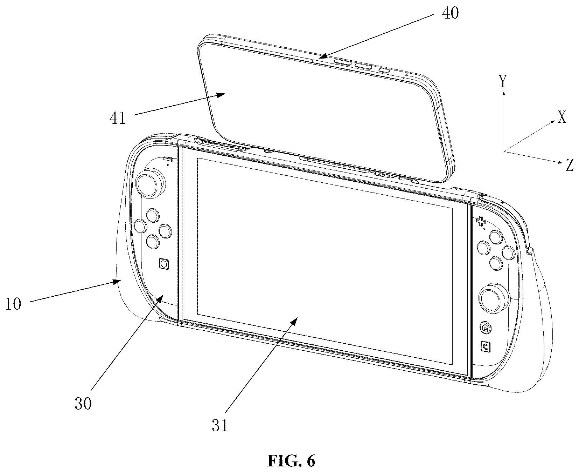

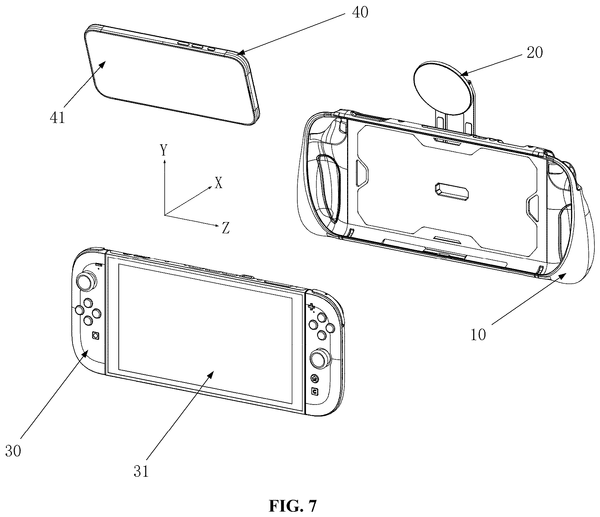

Referring to FIGS. 1-5, a connection system that involves the field of extended device connectivity is provided. The connection system is used to connect a first device 30 having a first display area 31 and a second device 40 having a second display area 41 (see FIGS. 6-7). The connection system includes a first shell 10 and a bracket 20. The first shell 10 is formed with a first receiving cavity 13, wherein the first device 30 is assembled along a first direction X into the first receiving cavity 13, exposing the first display area 31. One end of the bracket 20 is detachably connected to the side of the first shell 10 opposite to another side where the first device 30 is received. The second device 40 is assembled along the first direction X into the other end of the bracket 20, exposing the second display area 41. Wherein the bracket 20 extends at least partially along a second direction Y, with the first direction X being perpendicular to the second direction Y, enabling simultaneous exposure of the first display area 31 and the second display area 41.

Referring also to FIGS. 6-7, in present embodiment, the first device 30 is a game console, the second device 40 is a mobilephone. In other embodiments, the first device 30 and the second device 40 can be other devices each having one or more displays or display areas.

Specifially, the first shell 10 comprises a first main body 11 and a first extension part 12. The first extension part 12 is arranged around a periphery of the first main body 11 and extends in an opposite direction of the first direction X, such that the first main body 11 and the first extension part 12 cooperatively form the first receiving cavity 13. One end of the bracket 20 is connected to the side of the first main body 11 opposite to another side where the first device 30 is received, or connected to the side of the first extension part 12 opposite to the side where the first device 30 is received. Preferably, the bracket 20 is connected to the side of the first main body 11 opposite to the side where the first device 30 accommodated. The bracket 20 may have shapes such as a "7"-shaped, arc-shaped, or "Z"-shaped configuration. The bracket 20 extends at least partially along the second direction Y which is perpendicular to the first direction X, enabling the second device 40 to extend to a rear portion of the first device 30 and expose a second display area 41, facilitating simultaneous observation of both the first display area 31 and the second display area 41.

Specifically, the first extension part 12 is provided with an avoidance hole 121, which is used to avoid the heat dissipation hole, charging hole, card slot, buttons and other components of the first device 30, so that the first device 30 can be used better. The first extension part 12 covers the edge of the first device 30 on the side thereof away from the first shell 10 to receive the first device 30 into the first shell 10. The first main body 11 includes an installation part 111 and a protection part 112. The protection part 112 is set on an outer edge of the installation part 111, and is connected to the first extension part 12. The side of the installation part 111 facing away from the first device 30 is detachably connected to one end of the bracket 20. A hardness of the installation part 111 is greater than that of the protection part 112, thereby ensuring the connection strength between the bracket 20 and the first shell 10 while ensuring the user's grip sensation.

In this embodiment, the bracket 20 is connected to the side of the first main body 11 facing away from the side where the first device 30 is received, and the second direction Y can be any direction perpendicular to the first direction X. Preferably, the second direction Y is an upward or downward direction. More preferably, the second direction Y is a vertical upward direction.

In other embodiments, the bracket 20 is connected to the side of the first extension part 12 facing away from the side where the first device 30 is received, and the second direction Y can be a direction in which the first extension part 12 faces away from the first device 30.

As shown in FIGS. 1-5, the first shell 10 includes a first main body 11 and a first connection unit 1111. The first main body 11 is constructed to form the first receiving cavity 13. The first connection unit 1111 is set on the side of the first main body 11 facing away from the side where the first device 30 is received, and at least partially extends along the first direction X.

The bracket 20 includes a suction unit 23, a support unit 21, and a second connection unit 22, wherein the suction unit 23 is used to suck the second device 40. The support unit 21 extends at least partially along the second direction Y, with one end of the support unit 21 connected to the suction unit 23 and the other end of the support unit 21 detachably connected to the first connection unit 1111. The second connection unit 22 is connected to the end of the support unit 21 away from the suction unit 23, and the second connection unit 22 is detachably connected to the first connection unit 1111.

Specifically, the suction unit 23 is rotatably connected to the support unit 21, and the posture of the second device 40 can be adjusted by rotating the suction unit 23 to facilitate user observation of the second display area 41.

As shown in FIGS. 1-3 and 5, in this embodiment, the suction unit 23 and the support unit 21 are hinged through a first rotating shaft 24. A length direction of the first rotating shaft 24 is consistent with a third direction Z, which is perpendicular to the first direction X and perpendicular to the second direction Y. The posture of the second device 40 can be adjusted by rotating the suction unit 23 for facilitating observation of the second display area 41.

Specifically, the support unit 21 includes a third main body 211 and a third connecting part 212. The third main body 211 extends at least partially along the second direction Y. The third connecting part 212 is located at one end of the third main body 211 near the suction unit 23. The third connecting part 212 is provided with a first axis hole 2122, which is arranged along the third direction Z.

The suction unit 23 includes a suction part 231 and a fourth connecting part 232. One side of the suction part 231 is used for sucking the second device 40. The fourth connecting part 232 is located on the side of the suction part 231 facing away from the second device 40. The fourth connecting part 232 is provided with a second axis hole 2321, which is arranged along the third direction Z, wherein the first axis hole 2122 and the second axis hole 2321 are both used for assembling the first rotating shaft 24, so that the suction unit 23 and the support unit 21 can be hinged through the first rotating shaft 24.

Specifically, the third connecting part 212 includes two connecting legs 2121, which are spaced apart along the third direction Z to form an avoidance groove 2123 together with the third main body 211. The avoidance groove 2123 is used for the fourth connecting part 232 to be inserted, so that the second axis hole 2321 aligns with the first axis hole 2122.

More specifically, the suction part 231 includes a fifth main body 2311, a cover plate 2312, and a magnetic component 2313. The fifth main body 2311 and the cover plate 2312 form an accommodating space 2314, which is used to accommodate the magnetic component 2313. The fourth connecting part 232 includes a screw hole 2322, which in this embodiment is a blind hole and is arranged along the first direction X. The fifth main body 2311 is provided with a third through hole 23111, which is arranged along the first direction X and connected to the screw hole 2322. The screw 233 is inserted into the third through hole 23111 and the screw hole 2322 along the first direction X from the accommodating space 2314 to fix the fourth connecting part 232 and the suction part 231.

In other embodiments, the suction part 231 is a component such as a suction cup that sucks the second device 40.

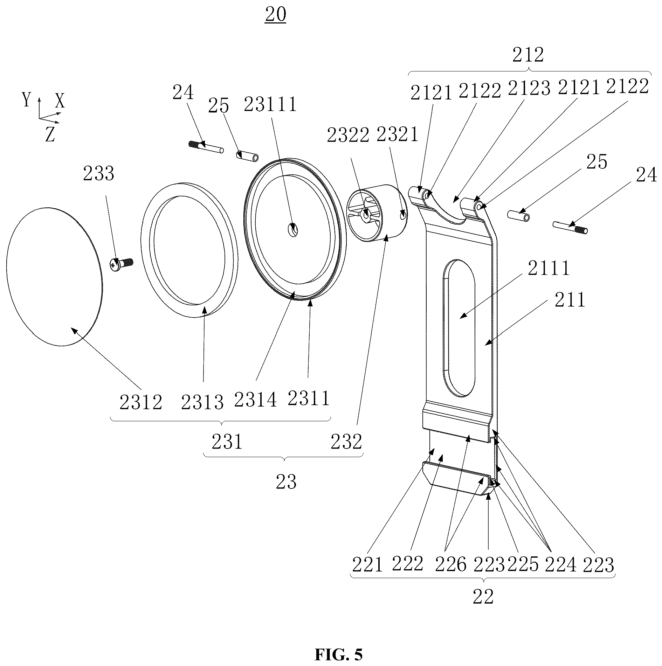

As shown in FIG. 5, in this embodiment, a damping sleeve 25 is provided between the first shaft 24 and the first axis hole 2122, or between the first shaft 24 and the second axis hole 2321, to facilitate fixing the posture of the second device 40 after the suction unit 23 rotates.

In other embodiments, the first shaft 24 is a damping shaft, which facilitates the fixing of the posture of the second device 40 after the suction unit 23 rotates.

As shown in FIGS. 1-3 and 5, it is preferable that the size of the third connecting part 212 in the first direction X is greater than the size of the third main body 211 in the first direction X, i.e., the thickness of the third connecting part 212 is greater than that of the third main body 211, thereby ensuring the strength of the third connecting part 212 when hinged to the fourth connecting part 232, and reducing the overall weight of the bracket 20. The third main body 211 is provided with a second through hole 2111 to reduce a weight of the bracket 20 and enhance the user experience.

As shown in FIGS. 1-3 and 5, the third connecting part 212 extends at least partially in the opposite direction of the first direction X, so that the second device 40 can extend in the opposite direction of the first direction X, making the first display area 31 level with the second display area 41, or the second display area 41 extends out of the plane where the first display area 31 is located, making the second display area 41 closer to the user and easier for the user to observe both the first display area 31 and second display area 41 simultaneously.

As shown in FIGS. 1-5, the first connection unit 1111 includes a first connecting part 11111 and a first clamping part 11112. The first connecting part 11111 is located on the side of the first main body 11 facing away from the first device 30, and extends along the first direction X. The first clamping part 11112 is set at one end of the first connecting part 11111 away from the first main body 11, and referring to FIG. 5, two ends of the first clamping part 11112 in opposite directions, i.e., respectively extend along the second direction Y and along the opposite direction of the second direction Y.

The second connection unit 22 includes a fourth main body 221, a second connecting part 223, and two second clamping parts 226. The fourth main body 221 is connected to one end of the support unit 21 away from the suction unit 23. The second connecting part 223 is located on the side of the fourth main body 221 facing the first connection unit 1111 and extends towards the first connection unit 1111. The second connecting part 223 is provided with a connecting slot 222, which is used for embedding the first connecting part 11111 and the first clamping part 11112 in the third direction Z. The two second clamping parts 226 are both located at one end of the second connecting part 223 facing the first connection unit 1111, and are respectively located on the two groove walls of the connecting slot 222, extending towards each other. There is a space formed between the two second clamping parts 226 to accommodate the passage of the first connecting part 11111, wherein the first connecting part 11111 and the second connecting part 223 have an interference fit.

Specifically, the two second clamping parts 226 cooperate with the first clamping part 11112 to limit the relative displacement of the first connection unit 1111 and the second connection unit 22 in the first direction X. The two second clamping parts 226 cooperate with the first connecting part 11111, and the first clamping part 11112 cooperates with the second connecting part 223 to limit the relative displacement of the first connection unit 1111 and the second connection unit 22 in the second direction Y. The first connecting part 11111 and the second connecting part 223 are interference fit, the first clamping part 11112 is interference fit with the second connecting part 223, and the two second clamping parts 226 are interference fit with the first connecting part 11111 to limit the relative displacement of the first connection unit 1111 and the second connection unit 22 in the third direction Z. Through the above settings, tighten the assembly of the first shell 10 and the bracket 20.

In other embodiments, the detachable connection between the second connection unit 22 and the first connection unit 1111 is achieved through fasteners or other means for fastening and assembly.

As shown in FIGS. 1-3 and 5, the second connecting part 223 extends in a direction away from the connecting slot 222, and the second connecting part 223 gradually increases in size along the third direction Z, to form a third guiding slope 224. The third guiding slope 224 facilitates the insertion of the first connection unit 1111 into the connecting slot 222.

As shown in FIGS. 1-3 and 5, the second clamping part 226 extends in a direction away from the connecting slot 222, and the second clamping part 226 gradually increases in size along the third direction Z, to form a fourth guiding slope 225, which facilitates the insertion of the first connection unit 1111 into the connecting slot 222. The direction away from the connecting slot 222 is the opposite direction of the first direction X.

Specifically, when the bracket 20 is assembled with the first shell 10, the first connection unit 1111 needs to be embedded in the connecting slot 222. Due to the interference fit between the first connection unit 1111 and the second connection unit 22, the size of the first connection unit 1111 is slightly greater than that of the connecting slot 222. Therefore, the first connection unit 1111 needs to be deformed and embedded into the connecting slot 222. If there is no setting of the third guiding slope 224 and the fourth guiding slope 225, it is necessary to compress the first connection unit 1111 to make its size smaller than the size of the connecting slot 222, and then assemble the first connection unit 1111 with the second connection unit 22, making it difficult to assemble the first connection unit 1111 with the second connection unit 22.

By setting the third guiding slope 224 and the fourth guiding slope 225, a guiding space is formed outside the connecting slot 222, which is slightly greater than the size of the first connection unit 1111. Therefore, during the assembly process of the first connection unit 1111 and the second connection unit 22, the third guiding slope 224 and the fourth guiding slope 225 guide the deformation of the first clamping part 11112 and the first connecting part 11111 of the first connection unit 1111, allowing the first connection unit 1111 to be smoothly inserted into the connecting slot 222 and achieving an interference fit between the first connection unit 1111 and the second connection unit 22, thereby realizing the fastening assembly of the bracket 20 and the first shell 10 together.

In addition, before embedding the first connection unit 1111 into the connecting slot 222, it is necessary to align the two. If the first connection unit 1111 is not aligned with the connecting slot 222, it will be difficult for the first connection unit 1111 to fit into the connecting slot 222. By setting the third guiding slope 224 and the fourth guiding slope 225, when the first connection unit 1111 is not aligned with the connecting slot 222, the third guiding slope 224 and the fourth guiding slope 225 guide the first connection unit 1111 to align with the connecting slot 222, which is more convenient for the assembly and connection of the first connection unit 1111 and the second connection unit 22.

As shown in FIGS. 1-5, viewed from the second direction Y, the size of the end of the first connecting part 11111 near the suction unit 23 along the third direction Z gradually decreases, and the size of the end of the first connecting part 11111 away from the suction unit 23 along the third direction Z gradually increases to form the first guiding slope 11113, which facilitates the insertion of the first connection unit 1111 into the connecting slot 222.

Specifically, before embedding the first connection unit 1111 into the connecting slot 222, it is necessary to align the two. If the first connection unit 1111 is not aligned with the connecting slot 222, it will be difficult for the first connection unit 1111 to fit into the connecting slot 222. By setting the first guiding slope 11113, when the first connection unit 1111 is not aligned with the connecting slot 222, the first guiding slope 11113 guides the first connection unit 1111 to align with the connecting slot 222, making it easier to connect the first connection unit 1111 to the second connection unit 22.

As shown in FIGS. 1-5, viewed from the first direction X, the size of the first clamping part 11112 along the third direction Z gradually decreases, and the size of the first clamping part 11112 along the second direction Y gradually decreases to form a second guiding slope 11114, which facilitates the insertion of the first clamping part 11112 into the connecting slot 222.

Specifically, when the bracket 20 is assembled with the first shell 10, the first connection unit 1111 needs to be embedded in the connecting slot 222. Due to the interference fit between the first connection unit 1111 and the second connection unit 22, the size of the first connection unit 1111 is slightly larger than that of the connecting slot 222, therefore, the first connection unit 1111 needs to be deformed and embedded into the connecting slot 222. If there is no setting for the third guiding slope 224, it is necessary to compress the first connection unit 1111 to make its size smaller than the size of the connecting slot 222, and then assemble the first connection unit 1111 with the second connection unit 22, making it difficult to assemble the first connection unit 1111 with the second connection unit 22.

By setting the second guiding slope 11114, a slope is formed around the outer circumference of the second clamping part 226, so that the size of the outer circumference of the second clamping part 226 is smaller than the size of the center of the second clamping part 226. Therefore, during the assembly process of the first connection unit 1111 and the second connection unit 22, the second guiding slope 11114 guides the outer edge of the connecting slot 222, causing the first connection unit 1111 to deform and smoothly insert into the connecting slot 222. This ensures that the first connection unit 1111 and the second connection unit 22 have an interference fit, thereby achieving the fastening assembly of the bracket 20 and the first shell 10 together.

In some embodiments, the center of the first shell 10 is provided with a first through hole 11115, which is arranged along the first direction X. The first through hole 11115 penetrates the first connecting part 11111 and the second connecting part 223.

The above descriptions are only preferred embodiments of the present disclosure, and are not intended to limit the patent scope of the present disclosure. Any equivalent structural transformation made by using the content of the specification and the drawings of the present disclosure under the invention idea of the present disclosure, directly or indirectly applied to other related technical fields, shall all be included in the scope of patent protection of the present disclosure.

## Claims

1. A connection system, configured for connecting a first device having a first display area and a second device having a second display area, comprising:
a first shell (10) providing a first receiving cavity (13) for receiving the first device (30) to expose the first display area (31); and
a bracket (20), one end of the bracket (20) being detachably connected to a side of the first shell (10) opposite to another side where the first device (30) is received; the other end of the bracket (20) being configured to hold the second device (40) by exposing the second display area (41).

2. The connection system according to claim 1, wherein the first shell comprises:
a first main body (11) providing the first receiving cavity (13); and
a first connection unit (1111) arranged on a side of the first main body (11) away from another side where the first device (30) is received, and at least partially extending along a first direction; and
wherein the bracket (20) comprises:
a suction unit (23), used to suck the second device (40); and
a support unit (21), extending at least partially along a second direction, with one end of the support unit (21) being connected to the suction unit (23) and the other end of the support unit (21) detachably connected to the first connection unit (1111); wherein the first direction is perpendicular to the second direction.

3. The connection system according to claim 2, wherein the suction unit (23) is rotatably connected to the support unit (21), such that a posture of the second device (40) can be adjusted by rotating the suction unit (23) for facilitating observation of the second display area (41); and
wherein the bracket (20) further comprises a second connection unit (22) connected between the support unit (21) and the first connection unit (1111), and the second connection unit (22) is detachably connected to the first connection unit (1111).

4. The connection system according to claim 3, wherein the suction unit (23) and the support unit (21) are hinged through a first rotating shaft (24), wherein a length direction of the first rotating shaft (24) is consistent with a third direction, which is perpendicular to the first direction and perpendicular to the second direction.

5. The connection system according to claim 4, wherein the support unit (21) comprises:
a third main body (211), extending at least partially along the second direction; and
a third connecting part (212), the third connecting part (212) being located at one end of the third main body (211) near the suction unit (23); and the third connecting part (212) being provided with a first axis hole (2122), which is arranged along the third direction Z; and
wherein the suction unit (23) comprises:
a suction part (231), one side of the suction part (231) being used for sucking the second device (40); and
a fourth connecting part (232), the fourth connecting part (232) being located on a side of the suction part (231) away from the second device (40); and the fourth connecting part (232) being provided with a second axis hole (2321) arranged along the third direction;
wherein the first axis hole (2122) and the second axis hole (2321) are both used for assembling the first rotating shaft (24), so that the suction unit (23) and the support unit (21) is hinged through the first rotating shaft (24).

6. The connection system according to claim 5, wherein a size of the third connecting part (212) in the first direction is greater than a size of the third main body (211) in the first direction, such that a thickness of the third connecting part (212) is greater than that of the third main body (211), thereby ensuring a strength of the third connecting part (212) when hinged to the fourth connecting part (232), and reducing an overall weight of the bracket (20).

7. The connection system according to claim 5, wherein the third connecting part (212) extends at least partially in a direction opposite to the first direction, so that the second display area (41) is capable of being level with the first display area (31), or the second display area (41) extends out of the plane where the first display area (31) is located.

8. The connection system according to claim 2, wherein the first connection unit (1111) comprises:
a first connecting part (11111), located on the side of the first main body (11) away from the first device (30), and extending along the first direction; and
a first clamping part (11112), arranged at one end of the first connecting part (11111) away from the first main body (11), and two ends of the first clamping part (11112) extending along directions away from each other; and
wherein the second connection unit (22) comprises:
a fourth main body (221), connected to one end of the support unit (21) away from the suction unit;
a second connecting part (223), located on a side of the fourth main body (221) facing the first connection unit (1111) and extending towards the first connection unit (1111); the second connecting part (223) being provided with a connecting slot (222), and the connecting slot (222) is used for embedding the first connecting part (11111) and the first clamping part (11112) in the third direction; and
two second clamping parts (226), the two second clamping parts (226) both located at one end of the second connecting part (223) facing the first connection unit (1111), and being respectively located on walls of the connecting slot (222), extending towards each other; and a space being formed between the two second clamping parts (226) to accommodate the first connecting part (11111);
wherein the third direction is perpendicular to the first direction and perpendicular to the second direction, and the first connecting part (11111) and the second connecting part (223) are in interference fit.

9. The connection system according to claim 8, wherein the second connecting part (223) extends in a direction away from the connecting slot (222), and the second connecting part (223) gradually increases in size along the third direction, to form a third guiding slope (224) for facilitating an insertion of the first connection unit (1111) into the connecting slot (222).

10. The connection system according to claim 8, wherein the second clamping part (226) extends in a direction away from the connecting slot (222), the second clamping part (226) gradually increases in size along the third direction, to form a fourth guiding slope (225) for facilitating an insertion of the first connection unit (1111) into the connecting slot (222).

11. The connection system according to claim 8, wherein viewed from the second direction , a size of an end of the first connecting part (11111) near the suction unit (23) along the third direction gradually decreases, and a size of another end of the first connecting part (11111) away from the suction unit (23) along the third direction gradually increases to form the first guiding slope (11113) for facilitating an insertion of the first connection unit (1111) into the connecting slot (222).

12. The connection system according to claim 8, wherein viewed from the first direction, a size of the first clamping part (11112) along the third direction gradually decreases, and a size of the first clamping part (11112) along the second direction gradually decreases to form a second guiding slope (11114) for facilitating an insertion of the first connection unit (1111) into the connecting slot (222).

13. The connection system according to claim 1, wherein the first receiving cavity (13) is configured for allowing the first device (30) to be received into the first receiving cavity (13) along a first direction; the other end of the bracket (20) is configured for allowing the second device (40) to be received therein along the first direction; and
the bracket (20) extends at least partially along a second direction, with the first direction being perpendicular to the second direction, enabling simultaneous exposure of the first display area (31) and the second display area (41).

## Amended claims

### Amended claims in accordance with Rule 137(2) EPC.

1. A connection system, configured for connecting a first device having a first display area, comprising:
a first shell (10) providing a first receiving cavity (13) for receiving the first device (30) to expose the first display area (31); and
a bracket (20), one end of the bracket (20) being detachably connected to a side of the first shell (10) opposite to another side where the first device (30) is received; **characterized in that**,
the other end of the bracket (20) is configured to hold a second device (40) by exposing a second display area (41) of the second device (40);
wherein the bracket (20) comprises:
a suction unit (23), used to suck the second device (40); and
a support unit (21), one end of the support unit (21) being connected to the suction unit (23) and the other end of the support unit (21) detachably connected to the first shell (10);
wherein the suction unit (23) is rotatably connected to the support unit (21), such that a posture of the second device (40) is adjustable by rotating the suction unit (23).

2. The connection system according to claim 1, wherein the first shell comprises:
a first main body (11) providing the first receiving cavity (13); and
a first connection unit (1111) arranged on a side of the first main body (11) away from another side where the first device (30) is received, and extending along a first direction; and
wherein the other end of the support unit (21) is detachably connected to the first connection unit (1111) of the first shell (10), and the support unit (21) extends along a second direction which is perpendicular to the first direction.

3. The connection system according to claim 2,
wherein the bracket (20) further comprises a second connection unit (22) connected between the support unit (21) and the first connection unit (1111), and the second connection unit (22) is detachably connected to the first connection unit (1111).

4. The connection system according to claim 3, wherein the suction unit (23) and the support unit (21) are hinged through a first rotating shaft (24), wherein a length direction of the first rotating shaft (24) is consistent with a third direction, which is perpendicular to the first direction and perpendicular to the second direction.

5. The connection system according to claim 4, wherein the support unit (21) comprises:
a third main body (211), extending along the second direction; and
a third connecting part (212), the third connecting part (212) being located at one end of the third main body (211) near the suction unit (23); and the third connecting part (212) being provided with a first axis hole (2122), which is arranged along the third direction Z; and
wherein the suction unit (23) comprises:
a suction part (231), one side of the suction part (231) being used for sucking the second device (40); and
a fourth connecting part (232), the fourth connecting part (232) being located on a side of the suction part (231) away from the second device (40); and the fourth connecting part (232) being provided with a second axis hole (2321) arranged along the third direction;
wherein the first axis hole (2122) and the second axis hole (2321) are both used for assembling the first rotating shaft (24), so that the suction unit (23) and the support unit (21) is hinged through the first rotating shaft (24).

6. The connection system according to claim 5, wherein a size of the third connecting part (212) in the first direction is greater than a size of the third main body (211) in the first direction, such that a thickness of the third connecting part (212) is greater than that of the third main body (211).

7. The connection system according to claim 5, wherein the third connecting part (212) extends in a direction opposite to the first direction, so that the second display area (41) is level with the first display area (31), or the second display area (41) extends out of the plane where the first display area (31) is located.

8. The connection system according to claim 2, wherein the first connection unit (1111) comprises:
a first connecting part (11111), located on the side of the first main body (11) away from the first device (30), and extending along the first direction; and
a first clamping part (11112), arranged at one end of the first connecting part (11111) away from the first main body (11), and two ends of the first clamping part (11112) extending along directions away from each other; and
wherein the second connection unit (22) comprises:
a fourth main body (221), connected to one end of the support unit (21) away from the suction unit;
a second connecting part (223), located on a side of the fourth main body (221) facing the first connection unit (1111) and extending towards the first connection unit (1111); the second connecting part (223) being provided with a connecting slot (222), and the connecting slot (222) is used for embedding the first connecting part (11111) and the first clamping part (11112) in the third direction; and
two second clamping parts (226), the two second clamping parts (226) both located at one end of the second connecting part (223) facing the first connection unit (1111), and being respectively located on walls of the connecting slot (222), extending towards each other; and a space being formed between the two second clamping parts (226) to accommodate the first connecting part (11111);
wherein the third direction is perpendicular to the first direction and perpendicular to the second direction, and the first connecting part (11111) and the second connecting part (223) are in interference fit.

9. The connection system according to claim 8, wherein the second connecting part (223) extends in a direction away from the connecting slot (222), and the second connecting part (223) gradually increases in size along the third direction, to form a third guiding slope (224) for facilitating an insertion of the first connection unit (1111) into the connecting slot (222).

10. The connection system according to claim 8, wherein the second clamping part (226) extends in a direction away from the connecting slot (222), the second clamping part (226) gradually increases in size along the third direction, to form a fourth guiding slope (225) for facilitating an insertion of the first connection unit (1111) into the connecting slot (222).

11. The connection system according to claim 8, wherein viewed from the second direction , a size of an end of the first connecting part (11111) near the suction unit (23) along the third direction gradually decreases, and a size of another end of the first connecting part (11111) away from the suction unit (23) along the third direction gradually increases to form the first guiding slope (11113).

12. The connection system according to claim 8, wherein viewed from the first direction, a size of the first clamping part (11112) along the third direction gradually decreases, and a size of the first clamping part (11112) along the second direction gradually decreases to form a second guiding slope (11114) for facilitating an insertion of the first connection unit (1111) into the connecting slot (222).

13. The connection system according to claim 1, wherein the first receiving cavity (13) is configured for allowing the first device (30) to be received into the first receiving cavity (13) along a first direction; the other end of the bracket (20) is configured for allowing the second device (40) to be received therein along the first direction; and
the bracket (20) extends along a second direction, with the first direction being perpendicular to the second direction, enabling simultaneous exposure of the first display area (31) and the second display area (41).
